# EUROPEAN PATENT APPLICATION

(11) **EP 4 447 257 A2**
(43) Date of publication of application: **16.10.2024**
(21) Application number: 24158271.7
(22) Date of filing: 19.02.2024
(51) Int. Cl.: H02J 7/00, B60L 58/19, B60L 58/21, B60L 58/22, H01M 10/44

(54) **BATTERY SYSTEM**

(30) Priority: 11.04.2023 JP 2023064011
(71) Applicant: TOYOTA JIDOSHA KABUSHIKI KAISHA, Toyota-shi, Aichi-ken, 471-8571 (JP)
(72) Inventor: SATOH, Nobuaki, Aichi-ken, 471-8571 (JP)
(74) Representative: Cabinet Beau de Loménie

(57) **Abstract**

A battery system (10) includes a first battery (12), a second battery (14), a first charging inlet (16), a charger (20), and an electric circuit (24). The electric circuit (24) is configured to be able to selectively establish one of a plurality of circuit structures including at least a first charging circuit structure and a first balancing circuit structure by selectively turning the plurality of switches (24a, 24b, 24c, 24d, 24e, 24f, 24g, 24h) on and off. In the first charging circuit structure, the first charging inlet (16) is electrically connected to a first end (21) of the charger (20) while the first battery (12) and the second battery (14) are electrically connected to a second end (22) of the charger (20). In the first balancing circuit structure, the first battery (12) is electrically connected to the first end (21) of the charger (20) while the second battery (14) is electrically connected to the second end (22) of the charger (20).

## Description

### 1. Field of the Invention

The technology disclosed in this Description relates to a battery system.

### 2. Description of Related Art

Japanese Unexamined Patent Application Publication No. 2019-118221 (JP 2019-118221 A) describes a battery system for a vehicle. This battery system includes two batteries and an electric circuit electrically connected to these two batteries. The electric circuit has a plurality of switches, and can selectively establish a circuit structure in which the two batteries are connected in parallel and a circuit structure in which the two batteries are connected in series.

### SUMMARY OF THE INVENTION

In a battery system including two batteries, a difference in voltage sometimes occurs between the two batteries. For example, when the two batteries are repeatedly charged and discharged in a state of being connected in series, a difference in voltage can occur between the two batteries due to individual differences existing between the two batteries. In this case, one of the two batteries may be excessively discharged or the other of the two batteries may be excessively charged. Or when the two batteries are connected in parallel after a difference in voltage occurs between the two batteries, an excessively high current may flow from one battery to the other battery.

In view of this problem, it is conceivable to provide a balancing circuit in a battery system including two or more batteries. The balancing circuit is electrically connected between two batteries and can supply electric power from one battery to the other battery. Thus, when a difference in voltage occurs between the two batteries, this difference in voltage can be eliminated or reduced by using the balancing circuit. However, the balancing circuit is one type of electric power converter, and the required size of the balancing circuit becomes larger as the rated voltages of the batteries become higher. Therefore, providing a balancing circuit in a battery system raises another problem in that it causes an increase in size and weight of the battery system.

Taking the foregoing into account, this Description provides a technology that can, in a battery system including two or more batteries, eliminate or reduce a difference in voltage occurring among these batteries, without requiring a balancing circuit.

An aspect of this disclosure relates to a battery system including a first battery and a second battery, a first charging inlet, a charger, and an electric circuit. The first charging inlet is detachably connected to an external power source. The charger has a first end and a second end and is configured to be able to control electric power supplied from the first end to the second end. The electric circuit is electrically connected to the first battery, the second battery, the first charging inlet, and the charger and configured to include a plurality of switches. The electric circuit is configured to be able to selectively establish one of a plurality of circuit structures including at least a first charging circuit structure and a first balancing circuit structure by selectively turning the plurality of switches on and off. In the first charging circuit structure, the first charging inlet is electrically connected to the first end of the charger while the first battery and the second battery are electrically connected to the second end of the charger. In the first balancing circuit structure, the first battery is electrically connected to the first end of the charger while the second battery is electrically connected to the second end of the charger.

According to the battery system of the aspect of this disclosure, the electric circuit including the plurality of switches can establish at least the first charging circuit structure and the first balancing circuit structure. When the electric circuit establishes the first charging circuit structure, the external power source is connected to the first battery and the second battery through the charger. Thus, the charger can charge the first battery and the second battery with electric power from the external power source. On the other hand, when the electric circuit establishes the first balancing circuit structure, the first battery is connected to the second battery through the charger. Thus, the charger can charge the second battery with electric power from the first battery. That is, when the voltage of the first battery is higher than the voltage of the second battery, electric power can be transmitted from the first battery to the second battery so as to eliminate or reduce the difference in voltage having occurred between the two batteries. In this way, the charger for charging by the external power source is used also for balancing between the two batteries, which can eliminate the need for a dedicated circuit for balancing.

In the battery system of an aspect of this disclosure, the charger may be a bidirectional charger configured to be able to control also electric power supplied from the second end to the first end. According to the battery system having this configuration, when the electric circuit establishes the first balancing circuit structure, the charger can charge the first battery with electric power from the second battery. That is, also when the voltage of the second battery is higher than the voltage of the first battery, electric power can be transmitted from the second battery to the first battery so as to eliminate or reduce the difference in voltage having occurred between the two batteries.

In the battery system of an aspect of this disclosure, in the first charging circuit structure, the first battery and the second battery may be connected in parallel. When the first battery and the second battery are connected in parallel, the first battery and the second battery can be charged at a relatively low voltage. However, if there is a difference in voltage between the first battery and the second battery when the first battery and the second battery are connected in parallel, an excessively high current may occur between the first battery and the second battery. In such a case, according to the battery system having the above-described configuration, the above-described balancing using the charger is performed before the first battery and the second battery are connected in parallel, and the difference in voltage can be thereby eliminated or reduced.

In the battery system of an aspect of this disclosure, the plurality of circuit structures may further include a driving circuit structure. In this case, in the driving circuit structure, the first battery and the second battery may be connected in series to an external load. When the electric circuit establishes the driving circuit structure, the battery system can supply high-voltage electric power from the first battery and the second battery to an external load. Here, a difference in voltage sometimes occurs between the first battery and the second battery that are connected in series. According to the battery system having the above-described configuration, when a difference in voltage between the first battery and the second battery occurs, the above-described balancing using the charger is performed, and the difference in voltage can be thereby eliminated or reduced.

In the battery system of an aspect of this disclosure, the external power source may be an alternating-current power source, and the charger may be an alternating-current charger. In this case, the alternating-current charger preferably has a configuration that enables not only AC-DC conversion of receiving alternating-current power from the first end and outputting direct-current power from the second end but also DC-DC conversion of receiving direct-current power from the first end and outputting direct-current power from the second end.

In the battery system of an aspect of this disclosure, the battery system may further include an electronic control unit. In this case, the electronic control unit may be configured to be able to selectively execute a plurality of processes including at least a balancing process by controlling the plurality of switches and the charger. The electronic control unit may be configured such that, in the balancing process, the electric circuit establishes the first balancing circuit structure while the charger supplies charging electric power from one of the first battery and the second battery to the other. As another aspect, the balancing process may be executed as the plurality of switches and the charger are controlled by an external electronic control unit.

In the battery system having the above-described configuration, in the balancing process, the charger may be configured to supply charging electric power from the first battery to the second battery when the voltage of the first battery is higher than the voltage of the second battery. In the balancing process, the charger may be configured to supply charging electric power from the second battery to the first battery when the voltage of the second battery is higher than the voltage of the first battery. According to the battery system having this configuration, the difference in voltage between the first battery and the second battery can be eliminated or reduced regardless of the magnitude relationship between the voltage of the first battery and the voltage of the second battery.

In the battery system having the above-described configuration, the electronic control unit may be configured to be able to further execute a first charging process as one of the plurality of processes. In this case, the electronic control unit may be configured such that, in the first charging process, the electric circuit establishes the first charging circuit structure while the charger controls charging electric power supplied from the external power source to the first battery and the second battery. Here, the first battery and the second battery may be connected in series to each other or may be connected in parallel to each other.

In the battery system having the above-described configuration, the electronic control unit may be configured to execute the balancing process before executing the first charging process at least at some of opportunities for executing the first charging process. According to the battery system having this configuration, the difference in voltage between the first battery and the second battery is eliminated or reduced before the first charging process is executed. Thus, when the first battery and the second battery are connected in parallel in the first charging process, an excessively high current flowing between the first battery and the second battery can be avoided. Or also when the first battery and the second battery are connected in series in the first charging process, overcharging of one of the first battery and the second battery can be avoided.

In the battery system having the above-described configuration, the electronic control unit may be configured to execute the balancing process before executing the first charging process when a difference in voltage between the first battery and the second battery is larger than a predetermined value. According to the battery system having this configuration, the electronic control unit can execute the balancing process with appropriate frequency by avoiding excessive execution of the balancing process.

In the battery system having the above-described configuration, the electronic control unit may be configured to execute the balancing process before executing the first charging process when connecting the first battery and the second battery in parallel in the first charging process. The electronic control unit may be configured to execute the first charging process without executing the balancing process when connecting the first battery and the second battery in series in the first charging process. Thus, the electronic control unit may be configured to execute the balancing process in advance when the first battery and the second battery are connected in parallel.

In the battery system having the above-described configuration, the electronic control unit may be configured to be able to acquire an expected time of charging at which the first charging process is to be executed. In this case, the electronic control unit may be configured to execute the balancing process when a time is within a first predetermined time until the expected time of charging. According to the battery system having this configuration, the electronic control unit can complete the balancing process by the expected time of charging and reliably start the first charging process at the expected time of charging.

In the battery system having the above-described configuration, the electronic control unit may be configured to be able to acquire an expected time of use at which the battery system is to be used. In this case, the electronic control unit may be configured to execute the balancing process when a time is within a second predetermined time until the expected time of use. In the balancing process, the first battery and the second battery are charged and discharged, so that the respective temperatures of the first battery and the second battery rise. According to the battery system of the above-described aspect, the electronic control unit executes the balancing process before the expected time of use and can thereby warm the first battery and the second battery before the battery system is used.

In the battery system of an aspect of this disclosure, the battery system may further include a second charging inlet that is detachably connected to an external direct-current charger and electrically connected to the electric circuit. In this case, the electric circuit may be configured to be able to further establish, as one of the plurality of circuit structures, a second charging circuit structure in which the first battery and the second battery are electrically connected to the second charging inlet. According to the battery system having this configuration, the first battery and the second battery of the battery system can be quickly charged by a direct-current charger installed in a public facility, for example, a charging station.

In the battery system having the above-described configuration, the battery system may further include an electronic control unit. In this case, the electronic control unit may be configured to be able to selectively execute a plurality of processes including at least a balancing process and a second charging process by controlling the plurality of switches and the charger. The electronic control unit may be configured such that, in the balancing process, the electric circuit establishes the first balancing circuit structure while the charger controls charging electric power supplied from one of the first battery and the second battery to the other. The electronic control unit may be configured such that, in the second charging process, the electric circuit establishes the second charging circuit structure while charging electric power is supplied from the external direct-current charger to the first battery and the second battery through the second charging inlet.

In the battery system having the above-described configuration, the electronic control unit may be configured to execute the balancing process before executing the second charging process at least at some of opportunities for executing the second charging process. According to the battery system having this configuration, the difference in voltage between the first battery and the second battery is eliminated or reduced before the second charging process is executed. In the second charging process, the first battery and the second battery may be connected in series to each other or may be connected in parallel to each other.

In the battery system having the above-described configuration, the electronic control unit may be configured to execute the balancing process before executing the second charging process when a difference in voltage between the first battery and the second battery is equal to or larger than a predetermined value. According to the battery system having this configuration, the electronic control unit can execute the balancing process at an appropriate timing while avoiding excessive execution of the balancing process.

In the battery system having the above-described configuration, the electronic control unit may be configured to execute the balancing process before executing the second charging process when connecting the first battery and the second battery in parallel in the second charging process. On the other hand, the electronic control unit may be configured to execute the second charging process without executing the balancing process when connecting the first battery and the second battery in series in the second charging process. According to the battery system having this configuration, the electronic control unit may execute the balancing process in advance when the first battery and the second battery are connected in parallel.

In the battery system of an aspect of this disclosure, the electric circuit may be configured to be able to further establish a second balancing circuit structure as one of the plurality of circuit structures. In this case, the second balancing circuit structure may be configured such that the second battery is electrically connected to the first end of the charger while the first battery is electrically connected to the second end of the charger. According to the battery system having this configuration, as the electric circuit selectively establishes the first balancing circuit structure or the second balancing circuit structure, electric power can be transmitted between the first battery and the second battery even when the charger is not a bidirectional charger.

In the battery system of an aspect of this disclosure, the battery system may further include an electronic control unit. In this case, the electronic control unit may be configured to be able to selectively execute a plurality of processes including at least a balancing process by controlling the plurality of switches and the charger. The electronic control unit may be configured such that, in the balancing process, when the voltage of the first battery is higher than the voltage of the second battery, the electric circuit establishes the first balancing circuit structure while the charger supplies charging electric power from the first battery to the second battery. On the other hand, the electronic control unit may be configured such that, in the balancing process, when the voltage of the second battery is higher than the voltage of the first battery, the electric circuit establishes the second balancing circuit structure while the charger supplies charging electric power from the second battery to the first battery. According to the battery system having this configuration, the difference in voltage between the first battery and the second battery can be eliminated or reduced regardless of the magnitude relationship between the voltage of the first battery and the voltage of the second battery.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a circuit diagram schematically showing the configuration of a battery system of an embodiment of this disclosure;
FIG. 2 is a circuit diagram schematically showing the internal configuration of the charger shown in FIG. 1;
FIG. 3 shows the battery system in which the electric circuit shown in FIG. 1 establishes a driving circuit structure;
FIG. 4 shows the battery system in which the electric circuit establishes a first charging circuit structure;
FIG. 5 shows the battery system in which the electric circuit establishes a second charging circuit structure;
FIG. 6 shows the battery system in which the electric circuit establishes a first balancing circuit;
FIG. 7 is a flowchart showing a first example of a condition for an electronic control unit (ECU) to execute a balancing process;
FIG. 8 is a flowchart showing a second example of the condition for the ECU to execute the balancing process;
FIG. 9 is a flowchart showing a third example of the condition for the ECU to execute the balancing process;
FIG. 10 is a flowchart showing a fourth example of the condition for the ECU to execute the balancing process; and
FIG. 11 shows an example of a circuit diagram schematically showing the configuration of a battery system in a modified example of this disclosure in which part of the electric circuit is changed.

### DETAILED DESCRIPTION OF EMBODIMENTS

In the following, a representative and non-restrictive specific example of the present invention will be described in detail with reference to the drawings. This detailed description is intended purely to show details for implementing a preferred example of the present invention to those skilled in the art, and is not intended to limit the scope of the present invention. The additional characteristics and inventions to be disclosed hereinafter can be used separately from or in combination with other characteristics and inventions in order to provide a further improved battery system.

The combinations of characteristics and steps to be disclosed in the following detailed description are not essential in implementing the present invention in the widest sense, and particularly will be described only to illustrate a representative specific example of the present invention. Further, the various characteristics of the foregoing and following representative specific examples as well as the various characteristics of the subject matter described in the independent and dependent claims are not such that, in order to provide an additional and useful embodiment of the present invention, these characteristics have to be combined as in the specific examples described herein or in the order in which they are enumerated.

All the characteristics described in this Description and/or Claims are intended to be disclosed individually and independently of one another as limitations to the specifications disclosed and claimed in the initial application, separately from the configurations of the characteristics described in the embodiment and/or Claims. Further, all descriptions relating to numerical ranges and groups or aggregations are given with the intention of disclosing configurations of intermediates of such numerical ranges etc. as limitations to the specifications disclosed and claimed in the initial application.

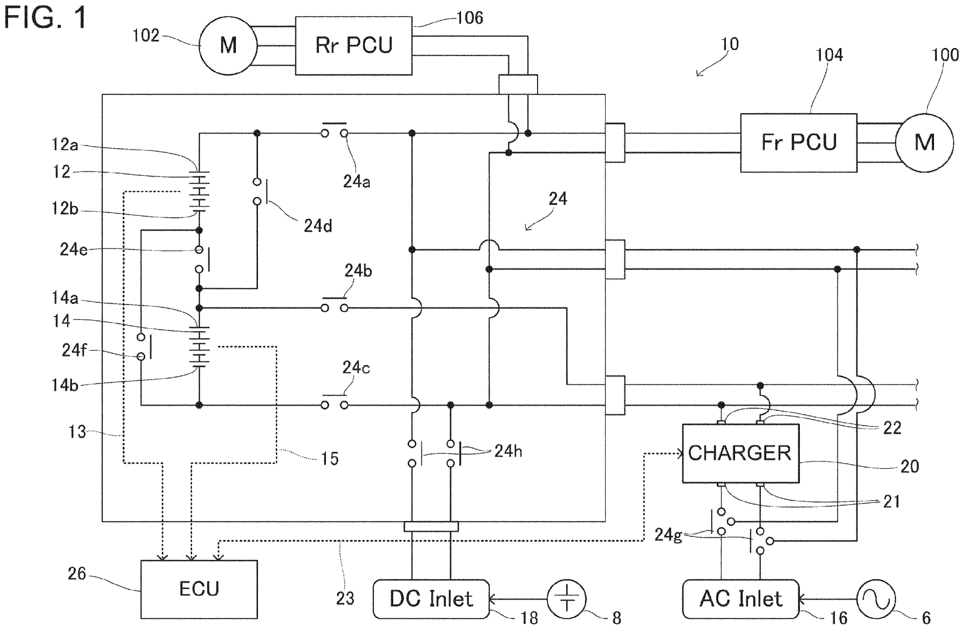

A battery system 10 of an embodiment will be described with reference to the drawings. The battery system 10 is one type of electric power storage device. While this is one example, as shown in FIG. 1, the battery system 10 is installed in an electrified vehicle, for example, and can supply electric power to one or more motors (M) 100, 102. One motor 100 is a traction motor that drives front wheels of the electrified vehicle, and is connected to the battery system 10 through a first power control unit (Fr PCU) 104. The other motor 102 is a traction motor that drives rear wheels of the electrified vehicle, and is connected to the battery system 10 through a second power control unit (Rr PCU) 106. Without being limited to an electrified vehicle, the battery system 10 can be adopted for arbitrary devices and facilities and can supply electric power to various loads.

As shown in FIG. 1, the battery system 10 includes a first battery 12, a second battery 14, a first charging inlet (AC Inlet) 16, a second charging inlet (DC Inlet) 18, a charger (CHARGER) 20, and an electric circuit 24. The electric circuit 24 electrically connects the first battery 12, the second battery 14, the first charging inlet 16, the second charging inlet 18, and the charger 20 to one another.

The first battery 12 has one or more secondary battery cells and is configured to be able to charge and discharge. The secondary battery cell is not particularly limited and may be, for example, a lithium-ion battery cell. The rated voltage of the first battery 12 is not particularly limited and may be, for example, 300 volts to 500 volts. The second battery 14 has the same structure as the first battery 12. That is, the rated voltage of the second battery 14 may be, for example, 300 volts to 500 volts as with the rated voltage of the first battery 12.

The first charging inlet 16 is detachably connected to an external power source 6. The external power source 6 is not particularly limited and is an alternating-current power source, such as a general power system. The first charging inlet 16 is electrically connected to the first battery 12, the second battery 14, and the charger 20 through the electric circuit 24. The first charging inlet 16 receives charging electric power for the first battery 12 and the second battery 14 from the external power source 6. The charging electric power from the external power source 6 is supplied to the first battery 12 and the second battery 14 through the charger 20.

The charger 20 is one type of electronic power control unit. The charger 20 has a first end 21 and a second end 22 and can control electric power supplied from the first end 21 to the second end 22. Specifically, the charger 20 can receive alternating-current power from the first end 21 and control direct-current power output from the second end 22. Further, the charger 20 can receive direct-current power from the first end 21 and control direct-current power output from the second end 22. In addition, the charger 20 can control also electric power supplied from the second end 22 to the first end 21. Specifically, the charger 20 can receive direct-current power from the second end 22 and control alternating-current power output from the first end 21. The charger 20 can receive direct-current power from the second end 22 and control direct-current power output from the first end 21. Thus, the charger 20 is a so-called bidirectional charger.

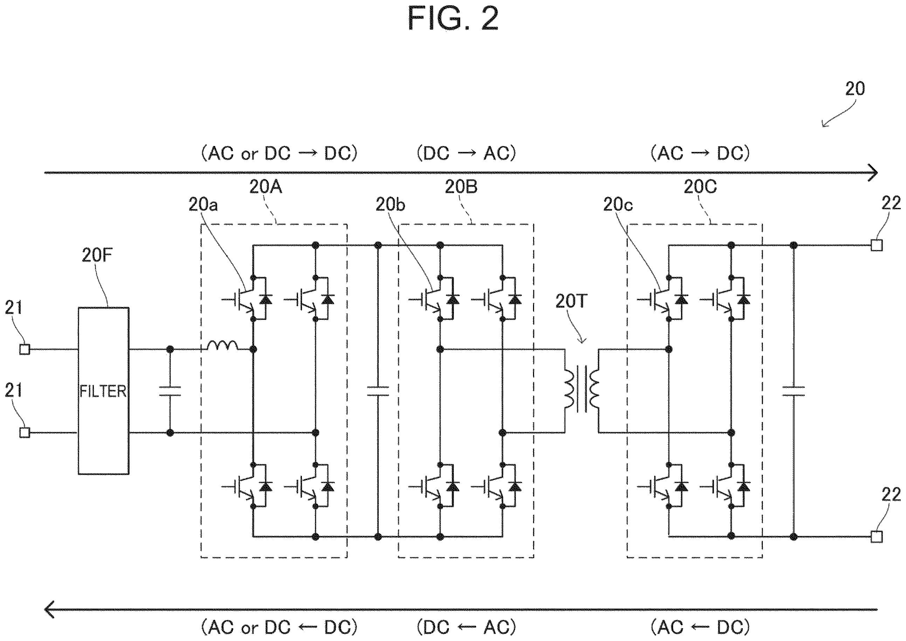

FIG. 2 shows the internal structure of the charger 20. The internal structure shown in FIG. 2 is one example, and the structure of the charger 20 is not limited thereto. As shown in FIG. 2, the charger 20 includes a first switching circuit 20A, a second switching circuit 20B, a third switching circuit 20C, and a high-frequency transformer 20T. The first switching circuit 20A is electrically connected to the first end 21 of the charger 20 through a filter circuit 20F. The second switching circuit 20B is electrically connected to the first switching circuit 20A. The second switching circuit 20B is connected to the third switching circuit 20C through the high-frequency transformer 20T. The third switching circuit 20C is connected to the second end 22 of the charger 20. Thus, between the first end 21 and the second end 22 of the charger 20, the first switching circuit 20A, the second switching circuit 20B, the high-frequency transformer 20T, and the third switching circuit 20C are sequentially connected.

The first switching circuit 20A has a plurality of switching elements 20a, and a reflux diode is connected in parallel to each of the switching elements 20a. Similarly, the second switching circuit 20B and the third switching circuit 20C include pluralities of switching elements 20b, 20c, and a reflux diode is connected in parallel to each of the switching elements 20b, 20c.

As described above, the charger 20 can receive alternating-current power from the first end 21 and control direct-current power output from the second end 22. In this case, the first switching circuit 20A functions as a power factor improving circuit and converts the alternating-current power from the first end 21 into direct-current power. The second switching circuit 20B functions as an H-bridge circuit and converts the alternating-current power from the first switching circuit 20A into high-frequency alternating-current power. The high-frequency alternating-current power from the second switching circuit 20B is transformed in the high-frequency transformer 20T before being supplied to the third switching circuit 20C. The third switching circuit 20C functions as a rectifier circuit and converts the high-frequency alternating-current power from the high-frequency transformer 20T into direct-current power. The direct-current power from the third switching circuit 20C is output from the second end 22.

The charger 20 can receive direct-current power from the first end 21 and control direct-current power output from the second end 22. In this case, the first switching circuit 20A allows the direct-current power from the first end 21 to pass as is. Or the first switching circuit 20A can also function as a step-up converter and raise the voltage of the direct-current power from the first end 21. Thereafter, in the same manner as described above, the second switching circuit 20B functions as an H-bridge circuit while the third switching circuit 20C functions as a rectifier circuit. Thus, the direct-current power from the third switching circuit 20C is output from the second end 22.

The charger 20 can receive direct-current power from the second end 22 and control direct-current power output from the first end 21. In this case, the third switching circuit 20C functions as an H-bridge circuit and converts the direct-current power from the second end 22 into high-frequency alternating-current power. The high-frequency alternating current power from the third switching circuit 20C is transformed in the high-frequency transformer 20T before being supplied to the second switching circuit 20B. The second switching circuit 20B functions as a rectifier circuit and converts the high-frequency alternating-current power from the high-frequency transformer 20T into direct-current power. Then, the first switching circuit 20A functions as an inverter and converts the direct-current power from the second switching circuit 20B into alternating-current power. Thus, alternating-current power from the first switching circuit 20A is output from the first end 21.

The charger 20 can receive direct-current power from the second end 22 and control direct-current power output from the first end 21. In this case, in the same manner as described above, the third switching circuit 20C functions as an H-bridge circuit while the second switching circuit 20B functions as a rectifier circuit. Thereafter, the first switching circuit 20A allows the direct-current power from the second switching circuit 20B to pass as is. Or the first switching circuit 20A can also function as a step-up converter and reduce the voltage of the direct-current power from the second switching circuit 20B. Thus, the direct-current power from the first switching circuit 20A is output from the first end 21.

The second charging inlet 18 is detachably connected to an external direct-current charger 8. The second charging inlet 18 is connected to the first battery 12 and the second battery 14 through the electric circuit 24. While not particularly limited, the direct-current charger 8 is installed in a public facility, for example, a charging station, and outputs direct-current power for charging the first battery 12 and the second battery 14. Direct-current chargers 8 installed in public places include those of low-voltage type and those of high-voltage type. Direct-current chargers 8 of low-voltage type can output direct-current power of, for example, 300 volts to 400 volts. On the other hand, direct-current chargers 8 of high-voltage type can output direct-current power of, for example, 600 volts to 800 volts.

The electric circuit 24 has a plurality of switches 24a to 24h. The electric circuit 24 can selectively establish one of a plurality of circuit structures by selectively turning the plurality of switches 24a to 24h on and off. While not particularly limited, the plurality of switches 24a to 24h includes a first switch 24a, a second switch 24b, a third switch 24c, a fourth switch 24d, a fifth switch 24e, a sixth switch 24f, a seventh switch 24g, and an eighth switch 24h.

One end of the first switch 24a is connected to a positive terminal 12a of the first battery 12. The one end of the first switch 24a is also connected to a negative terminal 12b of the first battery 12 through the fourth switch 24d and the fifth switch 24e. Further, the one end of the first switch 24a is also connected to a positive terminal 14a of the second battery 14 through the fourth switch 24d. On the other hand, the other end of the first switch 24a is connected to the first charging inlet 16 and the first end 21 of the charger 20 through the seventh switch 24g. The other end of the first switch 24a is also connected to the second charging inlet 18 through the eighth switch 24h.

One end of the second switch 24b is connected to the positive terminal 12a of the first battery 12 through the fourth switch 24d. The one end of the second switch 24b is also connected to the negative terminal 12b of the first battery 12 through the fifth switch 24e. Further, the one end of the second switch 24b is connected to the positive terminal 14a of the second battery 14. On the other hand, the other end of the second switch 24b is connected to the second end 22 of the charger 20.

One end of the third switch 24c is connected to the negative terminal 12b of the first battery 12 through the sixth switch 24f. The one end of the third switch 24c is also connected to a negative terminal 14b of the second battery 14. On the other hand, the other end of the third switch 24c is connected to the first charging inlet 16 and the first end 21 of the charger 20 through the seventh switch 24g. The other end of the third switch 24c is also connected to the second end 22 of the charger 20. Further, the other end of the third switch 24c is also connected to the second charging inlet 18 through the eighth switch 24h.

One end of the fourth switch 24d is connected to the positive terminal 12a of the first battery 12. On the other hand, the other end of the fourth switch 24d is connected to the positive terminal 14a of the second battery 14. Thus, when the fourth switch 24d is turned on, the positive terminal 12a of the first battery 12 and the positive terminal 14a of the second battery 14 are connected to each other.

One end of the fifth switch 24e is connected to the negative terminal 12b of the first battery 12. On the other hand, the other end of the fifth switch 24e is connected to the positive terminal 14a of the second battery 14. Thus, when the fifth switch 24e is turned on, the negative terminal 12b of the first battery 12 and the positive terminal 14a of the second battery 14 are connected to each other.

One end of the sixth switch 24f is connected to the negative terminal 12b of the first battery 12. On the other hand, the other end of the sixth switch 24f is connected to the negative terminal 14b of the second battery 14. Thus, when the sixth switch 24f is turned on, the negative terminal 12b of the first battery 12 and the negative terminal 14b of the second battery 14 are connected to each other.

The seventh switch 24g has a pair of three-terminal relays. One end of each of the pair of three-terminal relays is connected to the first end 21 of the charger 20. Another end of each of the pair of three-terminal relays is connected to the first charging inlet 16. The remaining ends of the pair of three-terminal relays are respectively connected to the other end of the first switch 24a and the other end of the third switch 24c. Thus, the seventh switch 24g can selectively connect either the first battery 12 and the second battery 14 or the first charging inlet 16 to the first end 21 of the charger 20.

The eighth switch 24h has a pair of relays. One end of each of the pair of relays is connected to the second charging inlet 18. The other ends of the pair of relays are respectively connected to the other end of the first switch 24a and the other end of the third switch 24c.

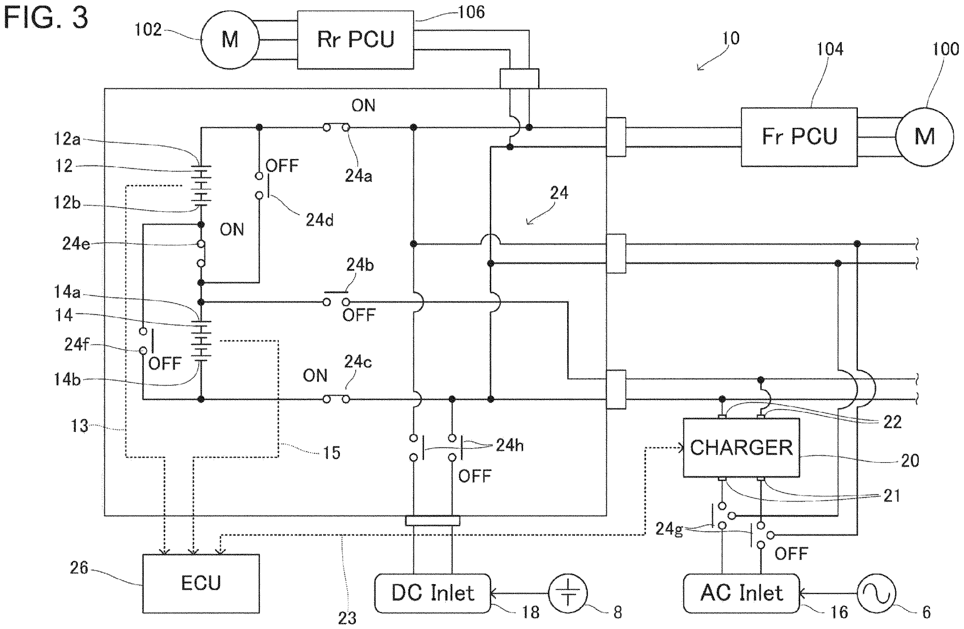

Thus configured, the electric circuit 24 can establish a driving circuit structure shown in FIG. 3 as one of the aforementioned plurality of circuit structures. In the driving circuit structure, the first switch 24a, the third switch 24c, and the fifth switch 24e are turned on, while the second switch 24b, the fourth switch 24d, the sixth switch 24f, the seventh switch 24g, and the eighth switch 24h are turned off. As a result, the first battery 12 and the second battery 14 are connected in series to each other as well as electrically connected to the one or more motors 100, 102. As the electric circuit 24 establishes the driving circuit structure, the battery system 10 becomes able to supply driving electric power from the first battery 12 and the second battery 14 to the one or more motors 100, 102. In particular, since the first battery 12 and the second battery 14 are connected in series, the battery system 10 can supply high-voltage driving electric power to the one or more motors 100, 102. Here, the one or more motors 100, 102 in this embodiment are examples of external loads in this technology. In another embodiment, the external load is not limited to electrical equipment installed in an electrified vehicle but may be electrical equipment located outside an electrified vehicle.

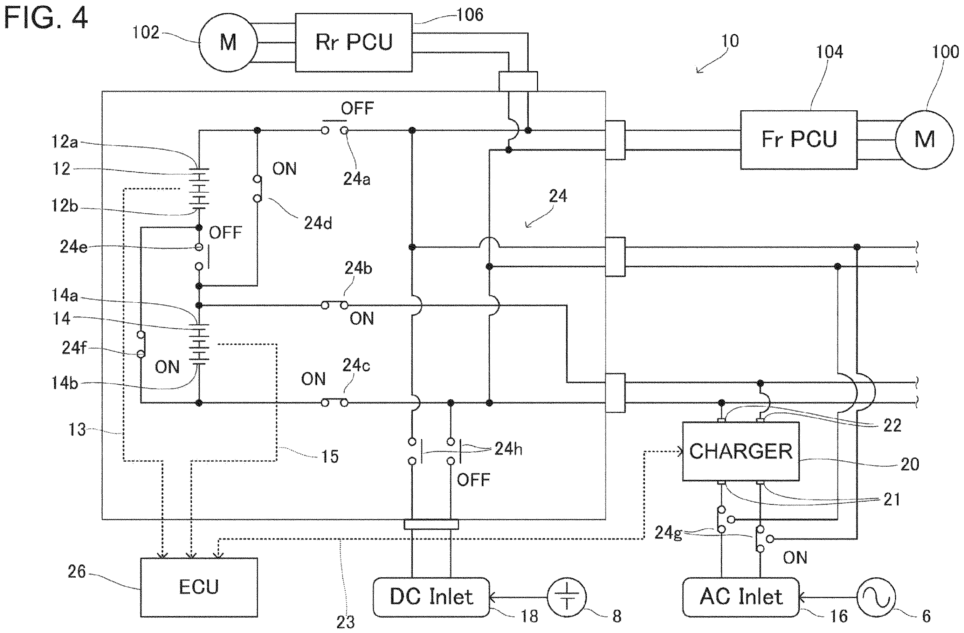

The electric circuit 24 can also establish a first charging circuit structure shown in FIG. 4 as one of the aforementioned plurality of circuit structures. In the first charging circuit structure, the second switch 24b, the third switch 24c, the fourth switch 24d, the sixth switch 24f, and the seventh switch 24g are turned on, while the first switch 24a, the fifth switch 24e, and the eighth switch 24h are turned off. As for the seventh switch 24g, the seventh switch 24g is turned on such that the first end 21 of the charger 20 are electrically connected to the first charging inlet 16. As a result, the first battery 12 and the second battery 14 are connected in parallel to each other as well as connected to the first charging inlet 16 through the charger 20. As the electric circuit 24 establishes the first charging circuit structure, the battery system 10 becomes able to charge the first battery 12 and the second battery 14 by the external power source 6 connected to the first charging inlet 16. In particular, since the first battery 12 and the second battery 14 are connected in parallel, the battery system 10 can charge the first battery 12 and the second battery 14 also when the output voltage of the external power source 6 is relatively low. However, in the first charging circuit structure, the first battery 12 and the second battery 14 may also be connected in series to each other.

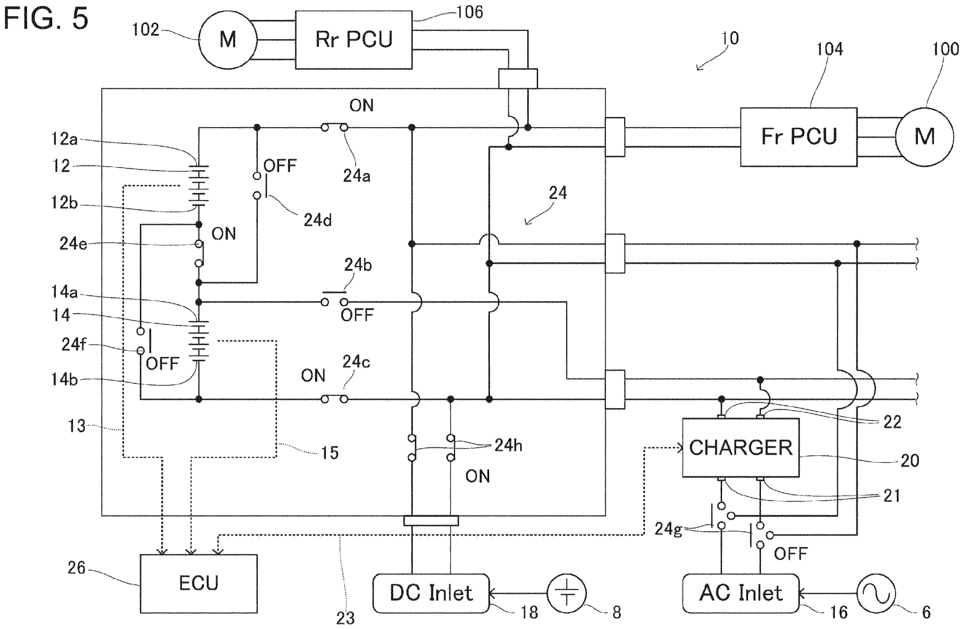

The electric circuit 24 can also establish a second charging circuit structure shown in FIG. 5 as one of the aforementioned plurality of circuit structures. In the second charging circuit structure, the first switch 24a, the third switch 24c, the fifth switch 24e, and the eighth switch 24h are turned on, while the second switch 24b, the fourth switch 24d, the sixth switch 24f, and the seventh switch 24g are turned off. As a result, the first battery 12 and the second battery 14 are connected in series to each other as well as connected to the second charging inlet 18. As the electric circuit 24 establishes the second charging circuit structure, the battery system 10 can charge the first battery 12 and the second battery 14 by the direct-current charger 8 connected to the second charging inlet 18. In particular, since the first battery 12 and the second battery 14 are connected in series, the battery system 10 can quickly charge the first battery 12 and the second battery 14. However, in the second charging circuit structure, the first battery 12 and the second battery 14 may also be connected in parallel to each other. For example, when the direct-current charger 8 is of high-voltage type, the first battery 12 and the second battery 14 are preferably connected in series, and when the direct-current charger 8 is of low-voltage type, the first battery 12 and the second battery 14 are preferably connected in parallel. Thus, regardless of whether the direct-current charger 8 is of low-voltage type or high-voltage type, the battery system 10 can charge the first battery 12 and the second battery 14 by the direct-current charger 8.

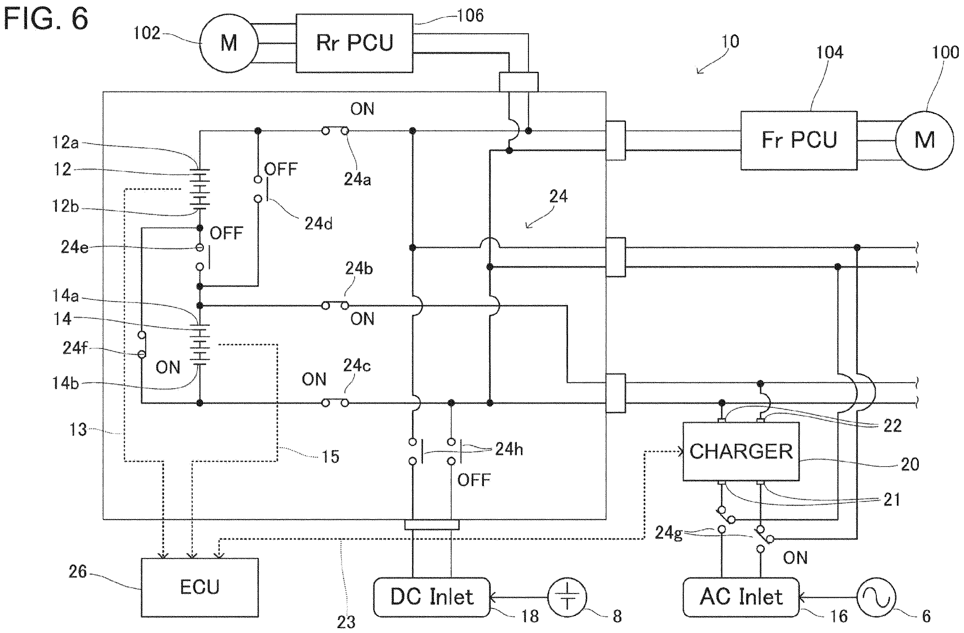

The electric circuit 24 can also establish a first balancing circuit structure shown in FIG. 6 as one of the aforementioned plurality of circuit structures. In the first balancing circuit structure, the first switch 24a, the second switch 24b, the third switch 24c, the sixth switch 24f, and the seventh switch 24g are turned on, while the fourth switch 24d, the fifth switch 24e, and the eighth switch 24h are turned off. As for the seventh switch 24g, the seventh switch 24g is turned on such that the first end 21 of the charger 20 are electrically connected to the first switch 24a and the third switch 24c. As a result, the first battery 12 is electrically connected to the first end 21 of the charger 20, while the second battery 14 is electrically connected to the first end 21 of the charger 20. As the electric circuit 24 establishes the first balancing circuit structure, the battery system 10 can charge the second battery 14 with electric power discharged from the first battery 12. Or the battery system 10 can charge the first battery 12 with electric power discharged from the second battery 14. Thus, the battery system 10 can perform balancing for eliminating the difference in voltage between the first battery 12 and the second battery 14.

The battery system 10 further includes an electronic control unit (ECU) 26. The ECU 26 can selectively execute a plurality of processes by controlling the plurality of switches 24a to 24h and the charger 20. The specific configuration of the ECU 26 is not particularly limited. While this is one example, the ECU 26 has a processor and a memory, and is configured to selectively execute a plurality of processes by executing various programs stored in the memory. The ECU 26 is connected to the charger 20 through a signal line 23. Thus, the ECU 26 can give operation commands to the charger 20 through the signal line 23. The ECU 26 is connected to the first battery 12 through a signal line 13 as well as connected to the second battery 14 through a signal line 15. Thus, the battery system 10 monitors the voltage of the first battery 12 and the voltage of the second battery 14 through the signal lines 13, 15, respectively.

The ECU 26 can execute a driving process as one of the aforementioned plurality of processes. In this driving process, the electric circuit 24 establishes the driving circuit structure (see FIG. 3), and the first battery 12 and the second battery 14 connected in series are electrically connected to the one or more motors 100, 102. Thus, the battery system 10 can supply driving electric power from the first battery 12 and the second battery 14 connected in series to the one or more motors 100, 102. At normal times, the ECU 26 executes the driving process and the electric circuit 24 establishes the driving circuit structure.

The ECU 26 can execute a first charging process as one of the aforementioned plurality of processes. In the first charging process, charging of the first battery 12 and the second battery 14 by the external power source 6 is performed. The ECU 26 is configured to execute the first charging process in accordance with a command from another ECU in the vehicle. Or the ECU 26 may be configured to execute the first charging process when the external power source 6 is connected to the first charging inlet 16. In the first charging process, the electric circuit 24 establishes the first charging circuit structure (see FIG. 4). The charger 20 controls charging electric power supplied from the external power source 6 to the first battery 12 and the second battery 14. Thus, the first battery 12 and the second battery 14 can be charged with the charging electric power supplied from the external power source 6.

The ECU 26 can execute a second charging process as one of the aforementioned plurality of processes. In the second charging process, charging of the first battery 12 and the second battery 14 by the direct-current charger 8 is performed. The ECU 26 is configured to execute the second charging process in accordance with a command from another ECU in the vehicle. Or the ECU 26 may be configured to execute the second charging process when the direct-current charger 8 is connected to the second charging inlet 18. In the second charging process, the electric circuit 24 establishes the second charging circuit structure (see FIG. 5). Thus, the first battery 12 and the second battery 14 can be charged with charging electric power supplied from the direct-current charger 8.

In the first charging process, the first battery 12 and the second battery 14 are connected in parallel to each other. Or, also in the first charging process, the first battery 12 and the second battery 14 are sometimes connected in parallel to each other. If a difference in voltage exists between the two batteries 12, 14 in these cases, an excessively high current may flow between the two batteries 12, 14 when the two batteries are connected in parallel to each other. For this reason, the ECU 26 is configured to be able to further execute a balancing process as one of the aforementioned plurality of processes. In the balancing process, the electric circuit 24 establishes the first balancing circuit structure (see FIG. 6). The charger 20 supplies charging electric power from one of the first battery 12 and the second battery 14 to the other. Specifically, when the voltage of the first battery 12 is higher than the voltage of the second battery 14, the charger 20 supplies charging electric power from the first battery 12 to the second battery 14. Conversely, when the voltage of the second battery 14 is higher than the voltage of the first battery 12, the charger 20 supplies charging electric power from the second battery 14 to the first battery 12. As a result, the difference in voltage between the first battery 12 and the second battery 14 is eliminated or reduced.

The timing at which the balancing process is executed is not particularly limited. For example, the ECU 26 may execute the balancing process in accordance with a program stored therein when a predetermined condition is met. Or the ECU 26 may execute the balancing process in accordance with instructions given by a user or an external device. In the following, some timings at which the ECU 26 executes the balancing process in the battery system 10 of this embodiment will be illustratively described.

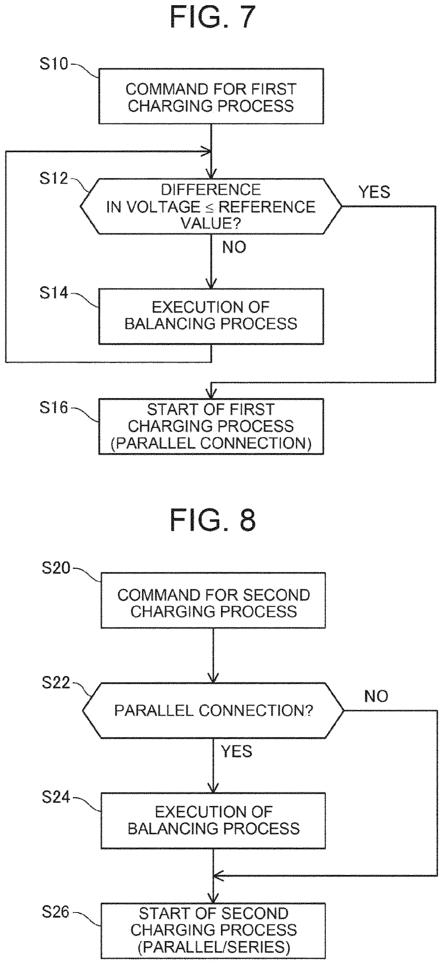

As shown in FIG. 7, as a first example of the condition for the ECU 26 to execute the balancing process, the ECU 26 may be configured to execute the balancing process upon receiving a command for the first charging process according to the difference in voltage between the first battery 12 and the second battery 14. That is, upon receiving a command for the first charging process (S 10), the ECU 26 detects the difference in voltage between the first battery 12 and the second battery 14 (S12). As mentioned above, the ECU 26 monitors the voltage of the first battery 12 and the voltage of the second battery 14 through the signal lines 13, 15. When the difference in voltage between the first battery 12 and the second battery 14 is larger than a predetermined reference value (NO in S12), the ECU 26 executes the balancing process (S14). When the difference in voltage between the first battery 12 and the second battery 14 becomes equal to or smaller than the reference value (YES in S12), the ECU 26 starts the first charging process (S16).

According to this configuration, the ECU 26 can eliminate or reduce the difference in voltage between the first battery 12 and the second battery 14 before connecting the first battery 12 and the second battery 14 in parallel in the first charging process. Thus, an excessively high current flowing between the first battery 12 and the second battery 14 can be avoided. On the other hand, when the difference in voltage between the first battery 12 and the second battery 14 is equal to or smaller than the reference value from the beginning, execution of the balancing process is skipped. Thus, the ECU 26 can execute the balancing process with appropriate frequency by avoiding excessive execution of the balancing process.

The ECU 26 may execute the process shown in FIG. 7 not only upon receiving a command for the first charging process but also upon receiving a command for the second charging process as well. In particular, also in the second charging process, when the first battery 12 and the second battery 14 are connected in parallel, it is preferable that the balancing process be executed according to the difference in voltage between the first battery 12 and the second battery 14. Thus, also in the second charging process, the difference in voltage between the first battery 12 and the second battery 14 can be eliminated or reduced before the first battery 12 and the second battery 14 are connected in parallel to each other.

In another embodiment, also in the case where the first battery 12 and the second battery 14 are connected in series in the first charging process and/or the second charging process, the balancing process may be selectively executed according to the difference in voltage between the first battery 12 and the second battery 14. If a difference in voltage exists between the two batteries 12, 14 connected in series when the two batteries 12, 14 are charged, one of the two batteries 12, 14 may be overcharged. Or avoiding such overcharging requires ending charging before the other of the two batteries 12, 14 is fully charged. These problems can also be prevented by executing the balancing process in advance.

As shown in FIG. 8, as a second example of the condition for the ECU 26 to execute the balancing process, the ECU 26 may be configured to execute the balancing process upon receiving a command for the second charging process according to the form of connection between the first battery 12 and the second battery 14. That is, upon receiving a command for the second charging process (S20), the ECU 26 checks the form of connection between the first battery 12 and the second battery 14 in the second charging process (S22). In the case where the first battery 12 and the second battery 14 are connected in parallel in the second charging process (YES in S22), the ECU 26 executes the balancing process (S24). Thereafter, the ECU 26 starts the second charging process (S26). On the other hand, in the case where the first battery 12 and the second battery 14 are connected in series in the second charging process (NO in S22), the ECU 26 starts the second charging process without executing the balancing process (S26).

According to this configuration, the ECU 26 can eliminate or reduce the difference in voltage between the first battery 12 and the second battery 14 before the first battery 12 and the second battery 14 are connected in parallel in the second charging process. Thus, an excessively high current flowing between the first battery 12 and the second battery 14 is avoided. On the other hand, in the case where the first battery 12 and the second battery 14 are connected in series in the second charging process, execution of the balancing process is skipped. Thus, the ECU 26 can execute the balancing process with appropriate frequency by avoiding excessive execution of the balancing process.

The ECU 26 may execute the process shown in FIG. 8 not only upon receiving a command for the second charging process but also upon receiving a command for the first charging process as well. As mentioned above, the first battery 12 and the second battery 14 may be connected in series to each other in the first charging process. Therefore, the ECU 26 may skip execution of the balancing process also in the first charging process when the first battery 12 and the second battery 14 are connected in series.

The ECU 26 may execute the series of steps shown in FIG. 7 and the series of steps shown in FIG. 8 in combination. That is, the ECU 26 may be configured to execute the balancing process when, in the first charging process and/or the second charging process, the difference in voltage between the two batteries 12, 14 is larger than the reference value and moreover the two batteries 12, 14 are connected in parallel. On the other hand, the ECU 26 may skip execution of the balancing process when, in the first charging process and/or the second charging process, the difference in voltage between the two batteries 12, 14 is equal to or smaller than the reference value or the two batteries 12, 14 are connected in series.

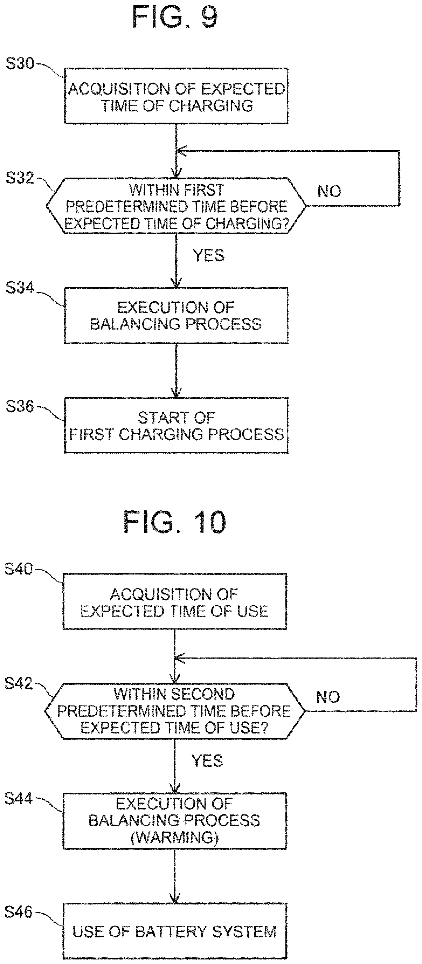

As shown in FIG. 9, as a third example of the condition for the ECU 26 to execute the balancing process, the ECU 26 may be configured to execute the balancing process according to an expected schedule of the first charging process. In this case, the ECU 26 first acquires an expected time of charging at which the first charging process should be executed (S30). The expected time of charging may be specified by the user or may be specified by another device. When a time is within a first predetermined time until the expected time of charging (YES in S32), the ECU 26 executes the balancing process (S34). Thereafter, when the expected time of charging is reached, the ECU 26 starts the first charging process (S36). According to this configuration, the ECU 26 can complete the balancing process by the expected time of charging and reliably start the first charging process at the expected time of charging. The ECU 26 may execute the process shown in FIG. 9 not only upon acquiring an expected time of the first charging process but also upon acquiring an expected time of the second charging process as well.

As shown in FIG. 10, as a fourth example of the condition for the ECU 26 to execute the balancing process, the ECU 26 may be configured to execute the balancing process according to an expected schedule of use of the battery system 10. In this case, the ECU 26 first acquires an expected time of use at which the battery system 10 is to be used (S40). The expected time of use may be specified by the user or may be specified by another device. When a time is within a second predetermined time until the expected time of use (YES in S42), the ECU 26 executes the balancing process (S44). Thereafter, when the expected time of use is reached, the battery system 10 starts to be used. The balancing process executed here is not necessarily for the purpose of balancing (voltage adjustment) between the two batteries 12, 14. In the balancing process, as the first battery 12 and the second battery 14 are charged and discharged, the respective temperatures of the first battery 12 and the second battery 14 rise. Therefore, by executing the balancing process before the expected time of use, the ECU 26 can warm the first battery 12 and the second battery 14 before the battery system 10 is used. Thus, the balancing process can be used also for warming of the first battery 12 and the second battery 14.

As has been described above, in the battery system 10 of this embodiment, the electric circuit 24 including the plurality of switches 24a to 24h can selectively establish a plurality of circuit structures. In particular, in the first balancing circuit (see FIG. 6), the first battery 12 is connected to the first end 21 of the charger 20 while the second battery 14 is connected to the second end 22 of the charger 20. That is, the first battery 12 and the second battery 14 are connected to each other through the charger 20. Thus, the charger 20 can perform balancing between the first battery 12 and the second battery 14 by transmitting electric power between the first battery 12 and the second battery 14. In this way, the charger 20 for charging by the external power source 6 is used also for balancing between the two batteries 12, 14, which can eliminate the need for a dedicated circuit for balancing.

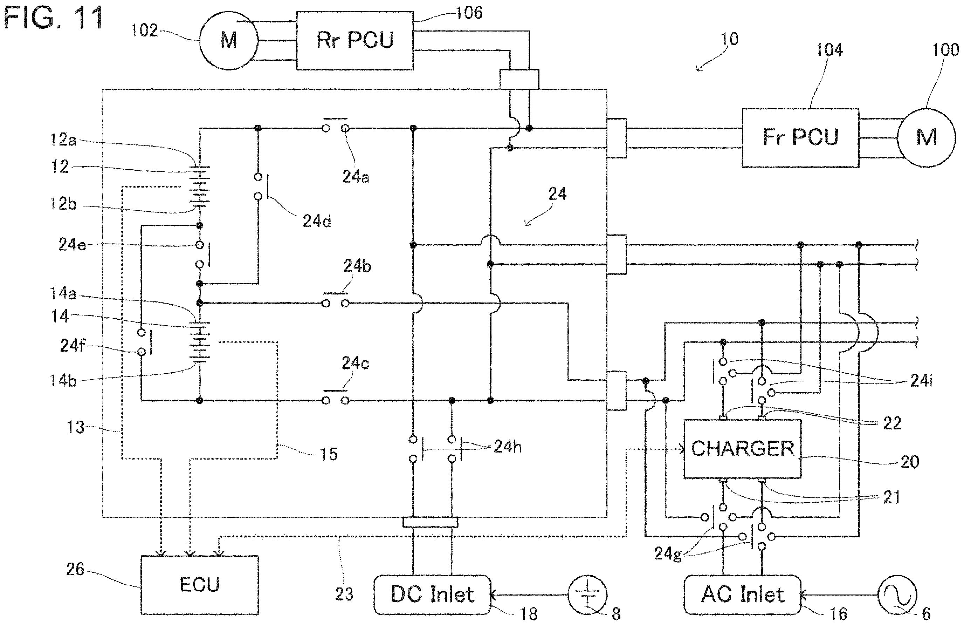

In the battery system 10 of this embodiment, the charger 20 is a bidirectional charger, but the charger 20 is not limited thereto. That is, the charger 20 may be a unidirectional charger that can supply electric power only from the first end 21 to the second end 22. In this case, while not particularly limited, the electric circuit 24 preferably has the structure shown in FIG. 11. Specifically, the electric circuit 24 preferably further includes a ninth switch 24i. The ninth switch 24i is a pair of three-terminal relays. One end of each of the pair of three-terminal relays is connected to the second end 22 of the charger 20. Other ends of the pair of three-terminal relays are respectively connected to the other end of the first switch 24a and the other end of the third switch 24c. The remaining ends of the pair of three-terminal relays are respectively connected to the other end of the second switch 24b and the other end of the third switch 24c.

In addition, in the electric circuit 24 shown in FIG. 11, the seventh switch 24g is changed from a pair of three-terminal relays to a pair of four-terminal relays. The other end of the second switch 24b and the other end of the third switch 24c are connected to ends that have been added as a result of the change to the pair of four-terminal relays. According to this configuration, the electric circuit 24 can further establish a second balancing circuit structure in addition to the first balancing circuit structure (see FIG. 6). In the second balancing circuit structure, the first switch 24a, the second switch 24b, the third switch 24c, the sixth switch 24f, the seventh switch 24g, and the ninth switch 24i are turned on, while the fourth switch 24d, the fifth switch 24e, and the eighth switch 24h are turned off.

As for the seventh switch 24g, the seventh switch 24g is turned on such that the first end 21 of the charger 20 are electrically connected to the second switch 24b and the third switch 24c. As for the ninth switch 24i, the ninth switch 24i is turned on such that the second end 22 of the charger 20 are electrically connected to the first switch 24a and the third switch 24c.

When the electric circuit 24 establishes the second balancing circuit structure, the second battery 14 is connected to the first end 21 of the charger 20 and the first battery 12 is connected to the second end 22 of the charger 20. Thus, the charger 20 can transmit electric power from the second battery 14 to the first battery 12 by supplying electric power from the first end 21 to the second end 22. With the configuration of the electric circuit 24 thus changed, also when the charger 20 is not a bidirectional charger, the battery system 10 can transmit electric power not only from the first battery 12 to the second battery 14 but also from the second battery 14 to the first battery 12. The configuration of the electric circuit 24 having been described in this Description is one example, and appropriate changes can be made as necessary to the configuration of the electric circuit 24 in terms of the positions and the number of the switches 24a to 24i, etc.

## Claims

1. A battery system (10), comprising:
a first battery (12);
a second battery (14);
a first charging inlet (16) detachably connected to an external power source (6);
a charger (20) including a first end (21) and a second end (22) and configured to be able to control electric power supplied from the first end (21) to the second end (22); and
an electric circuit (24) electrically connected to the first battery (12), the second battery (14), the first charging inlet (16), and the charger (20) and configured to include a plurality of switches (24a, 24b, 24c, 24d, 24e, 24f, 24g, 24h), wherein
the electric circuit (24) is configured to be able to selectively establish one of a plurality of circuit structures including at least a first charging circuit structure and a first balancing circuit structure by selectively turning the plurality of switches (24a, 24b, 24c, 24d, 24e, 24f, 24g, 24h) on and off,
in the first charging circuit structure, the first charging inlet (16) is electrically connected to the first end (21) of the charger (20) while the first battery (12) and the second battery (14) are electrically connected to the second end (22) of the charger (20), and
in the first balancing circuit structure, the first battery (12) is electrically connected to the first end (21) of the charger (20) while the second battery (14) is electrically connected to the second end (22) of the charger (20).

2. The battery system (10) according to claim 1, wherein the charger (20) is a bidirectional charger configured to be able to control also electric power supplied from the second end (22) to the first end (21).

3. The battery system (10) according to claim 1, wherein, in the first charging circuit structure, the first battery (12) and the second battery (14) are connected in parallel.

4. The battery system (10) according to claim 1, wherein:
the plurality of circuit structures further includes a driving circuit structure; and
in the driving circuit structure, the first battery (12) and the second battery (14) are connected in series to an external load.

5. The battery system (10) according to claim 1, wherein:
the external power source (6) is an alternating-current power source; and
the charger (20) is an alternating-current charger.

6. The battery system (10) according to claim 1, further comprising an electronic control unit (26) configured to be able to selectively execute a plurality of processes including at least a balancing process by controlling the plurality of switches (24a, 24b, 24c, 24d, 24e, 24f, 24g, 24h) and the charger (20), wherein the electronic control unit (26) is configured such that, in the balancing process, the electric circuit (24) establishes the first balancing circuit structure while the charger (20) supplies charging electric power from one of the first battery (12) and the second battery (14) to the other.

7. The battery system (10) according to claim 6, wherein:
the charger (20) is configured to supply, in the balancing process, charging electric power from the first battery (12) to the second battery (14) when a voltage of the first battery (12) is higher than a voltage of the second battery (14); and
the charger (20) is configured to supply, in the balancing process, charging electric power from the second battery (14) to the first battery (12) when the voltage of the second battery (14) is higher than the voltage of the first battery (12).

8. The battery system (10) according to claim 6, wherein:
the electronic control unit (26) is configured to be able to further execute a first charging process as one of the plurality of processes; and
the electronic control unit (26) is configured such that, in the first charging process, the electric circuit (24) establishes the first charging circuit structure while the charger (20) controls charging electric power supplied from the external power source (6) to the first battery (12) and the second battery (14).

9. The battery system (10) according to claim 8, wherein the electronic control unit (26) is configured to execute the balancing process before executing the first charging process at least at some of opportunities for executing the first charging process.

10. The battery system (10) according to claim 8, wherein the electronic control unit (26) is configured to be able to acquire an expected time of charging at which the first charging process is to be executed, and is configured to execute the balancing process when a time is within a first predetermined time until the expected time of charging.

11. The battery system (10) according to claim 1, further comprising a second charging inlet (18) that is detachably connected to an external direct-current charger and electrically connected to the electric circuit (24), wherein the electric circuit (24) is configured to be able to further establish, as one of the plurality of circuit structures, a second charging circuit structure in which the first battery (12) and the second battery (14) are electrically connected to the second charging inlet (18).

12. The battery system (10) according to claim 11, further comprising an electronic control unit (26) configured to be able to selectively execute a plurality of processes including at least a balancing process and a second charging process by controlling the plurality of switches (24a, 24b, 24c, 24d, 24e, 24f, 24g, 24h) and the charger (20), wherein:
the electronic control unit (26) is configured such that, in the balancing process, the electric circuit (24) establishes the first balancing circuit structure while the charger (20) controls charging electric power supplied from one of the first battery (12) and the second battery (14) to the other; and
the electronic control unit (26) is configured such that, in the second charging process, the electric circuit (24) establishes the second charging circuit structure while charging electric power is supplied from the external direct-current charger to the first battery (12) and the second battery (14) through the second charging inlet (18).

13. The battery system (10) according to claim 12, wherein the electronic control unit (26) is configured to execute the balancing process before executing the second charging process at least at some of opportunities for executing the second charging process.

14. The battery system (10) according to claim 1, wherein:
the electric circuit (24) is configured to be able to further establish a second balancing circuit structure as one of the plurality of circuit structures; and
the second balancing circuit structure is configured such that the second battery (14) is electrically connected to the first end (21) of the charger (20) while the first battery (12) is electrically connected to the second end (22) of the charger (20).

15. The battery system (10) according to claim 14, further comprising an electronic control unit (26) configured to be able to selectively execute a plurality of processes including at least a balancing process by controlling the plurality of switches (24a, 24b, 24c, 24d, 24e, 24f, 24g, 24h) and the charger (20), wherein:
the electronic control unit (26) is configured such that, in the balancing process, when a voltage of the first battery (12) is higher than a voltage of the second battery (14), the electric circuit (24) establishes the first balancing circuit structure while the charger (20) supplies charging electric power from the first battery (12) to the second battery (14); and
the electronic control unit (26) is configured such that, in the balancing process, when the voltage of the second battery (14) is higher than the voltage of the first battery (12), the electric circuit (24) establishes the second balancing circuit structure while the charger (20) supplies charging electric power from the second battery (14) to the first battery (12).
